# EUROPEAN PATENT APPLICATION

(11) **EP 2 687 798 A2**
(43) Date of publication of application: **22.01.2014**
(21) Application number: 13386006.4
(22) Date of filing: 15.02.2013
(51) Int. Cl.: F25D 31/00

(54) **New household benchtop device for purifying and cooling water**

(30) Priority: 06.03.2012 GR 20120100129
(71) Applicant: Papadopoulos, F. Christos, 118 55 Votanikos, Athens (GR)
(72) Inventor: Papadopoulos, F. Christos, 118 55 Votanikos, Athens (GR)

(57) **Abstract**

The invention relates to a benchtop, houselhold device for purifying and cooling water, which comprises a cooling reservoir (4), in which mains water is cooled by thermoelectric peltier elements (7) connected to a power supply (8). Through pipes (3), the water is then directed to an active-carbon filter (9) and a UV lamp (11), which is activated by a pressure controller (10) and arranged in an aluminum casing (12) so that it does not emits, and finally reaches an outlet tap (13). Depending on the adjustment of a three-way fitting (5) and a T-shaped fitting (6) at the inlet and the outlet of the cooling reservoir (4) respectively, the user may select to obtain water exclusively from the cooling reservoir (4) or directly from the mains or mixed water.

## Description

The present invention relates to a benchtop device which can provide cold water free from microbes, chlorine or other pathogenic microorganisms. The device is connected directly to a tap without any particular skills, and its small size and high independence constitute further advantages.

Until known, the provision of cold water has been effected either by using bottles kept in the refrigerator of by the cooling systems of the modern refrigerators. Also, in occupational areas mainly, water coolers may be found which are either directly connected to the water mains or use bottled water. All these systems present similar disadvantages and pathogenies, which make them expensive and harmful for the consumers' health. The use of bottles kept in a refrigerator, although being the commonest method, is apparently one of the most harmful. The users keep tap water in bottles for a long time, allowing a potential growth of microorganisms, and the bottles are usually re-filled continuously without being previously washed. The plastic bottles kept by many users in refrigerators may be made of polypropylene, polystyrene, poly(vinyl chloride) or other materials which may be toxic, and the chemical substances used for their manufacture may enter potable water.

Modern refrigerators include cooling units which can provide cold water as desired. The water is again obtained from the water mains without any sterilization, and before it reaches the user it passes through pipes, both of the mains and of the refrigerator, in which microorganisms and microbes are grown. Therefore, it is recommended to pour the first glass of water since it has a particular taste. There are also refrigerators which include small reservoirs for water storage, which cool water and from which the user draws cold water. Obviously, these are more harmful solutions, since the water is not running water, but water that has been kept for a long time in the reservoir, depending on the use by the users. It should be noted that the problem becomes more serious in metallic water coolers located in occupational areas, since their construction materials have been proven responsible for various serious diseases. The solder used in these water coolers contains cadmium, which is a carcinogenic heavy metal that passes through the water to the consumers.

Additional problems are presented in the environment, since the use of plastic bottles is increased, and increased consumption of energy due to the continual opening or closing of refrigerators. Further problems are caused by the fact that the said devices usually employ Freon as cooling medium, which is a chemical agent that can be harmful if released in the environment, since it is toxic. Finally, it should be noted that none of the said devices allows a further sterilization of the water before being consumed. This means that water, although chlorinated in the mains, may travel several kilometers through old and worn pipes of the mains and of the consumer's house without being filtered again before consumption.

On the contrary, the present invention shows various advantages which address the said problems and make it ideal for domestic use, ensuring cold and filtered water for the consumers. It is the only tabletop device that has an active-carbon filter and a cooling system directly connectable to the tap. It is installed easily, without any particular skills, and is ergonomic and convenient in operation. A significant advantage is that it has no moving parts, thus the maintenance requirements are minimal. Furthermore, the heat-insulating capabilities and design of the device allow preservation of the water temperature for a long time period, independently from the established environmental conditions. The device includes support circuits, which allow a control on the water temperature with an accuracy which exemplarily may be even of the order of 1°F. Finally, since thermoelectric peltier systems are used, as power sources for cooling the water, carbon dioxide emissions are nullified, and at the same time it is not necessary to open or close the refrigerator in order to obtain water, and thus power consumption is reduced. These components, along with others which will be mentioned hereinbelow, make the device environmentally friendly, thereby further promoting its use by the consumers.

These and further features and advantages will be apparent by the following detailed description. The invention will be fully understood by reference to the accompanying figures, which show an exemplary embodiment thereof.
Figure 1 shows the components constituting the device as well as the water flow from the inlet in the device until the outlet therefrom.
Figure 2 shows a flow diagram of the water cooling and purification procedure.

The invention relates to a houselhold benchtop device which allows the supply of cold water that is completely free from microbes, pathogenic organisms and chlorine. Its small size, independence and the fact that it can be directly connected to the water mains, without requiring specific skills, make it unique and necessary for each house.

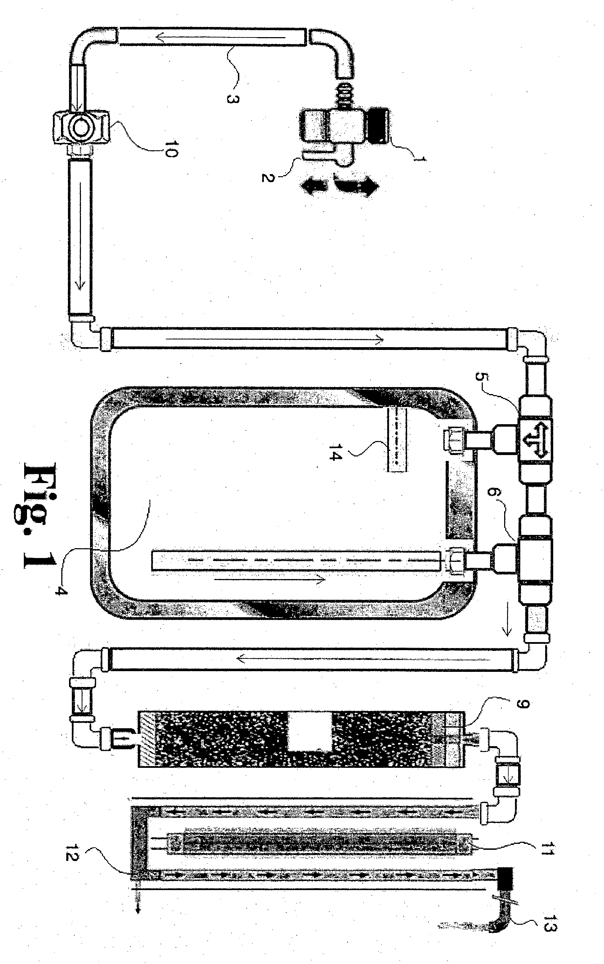

For its operation, the device requires simply to be connected to the water mains and a socket for power supply. The operation of the device may be distinguished in two stages. In the first stage, the water is cooled and in the second stage it is purified. To the mains supply a splitter (1), figure 1, is connected which directs water depending on the user's choice. Depending on the position of its switch (2), the water flows either to the cooling and purification device, or directly from the tap so that the consumer may, for example, wash his household utensils. The water fills through the pipes (3) the cooling reservoir (4), so that it is cooled. It should be noted that the cooling reservoir (4) is made of any suitable material that can be quickly cooled and maintain its low temperature for a long time period. As an reinforcement, the cooling reservoir (4) is surrounded by a suitable heat-insulating material, so that heat losses are reduced and the capacity to keep water cold is increased. The cooling reservoir (4) has a gasket (14) at its upper part, at the point where this is filled with water, so that the water is inhibited from directly dispensing in the reservoir. In this way, a gradual mixing of the tap water with the already cooled water in the cooling reservoir (4) is effected. For the same reason, the water is pumped from the base of the cooling reservoir (4), since the cold water, being heavier, is accumulated at the lower section, while tap water is mainly located at the upper section of the reservoir.

At the inlet and the outlet of the cooling reservoir (4), a three-way fitting (5) and a T-shaped fitting (6) are connected, through which the consumer may obtain exclusively cold water, mixed water, and water at the mains temperature, which however has the advantage that it is pure from microbes or other chemical substances. In particular, the three-way fitting (5) and the T-shaped fitting (6) are components with one inlet and two outlets, and two inlets and one outlet respectively. Thus, when water reaches from the mains through the pipes (3) to the three-way fitting (5), the choices are two: either the water will be supplied through one outlet thereof to the cooling reservoir (4) to fill it and get cooled, or is directed to the T-shaped fitting (6) without passing through the reservoir. Respectively, at the outlet of the T-shaped fitting (6), either water of the mains is exclusively obtained, which will come from the three-way fitting (5) if it has not passed through the cooling reservoir (4), or exclusively cold water coming from the inlet of the T-shaped fitting (6) which is immersed in the cooling reservoir (4), or a combination of cold water from the reservoir and water from the mains which has not passed through the cooling reservoir. Thus, water at an individually desired temperature will be obtained, depending on how the three-way fitting (5) and the T-shaped fitting (6) will be adjusted.

Cooling of the water is effected, as already mentioned, by cooling the cooling reservoir (4), in which a water quantity is kept. The reservoir has no coil, i.e. a pipe in which Freon or another known water-cooling substance is contained, but cooling is effected externally by using thermoelectric peltier elements. Thus, contact of potable water with the cooling elements, which may erode and contaminate it, is prevented, and the avoidance of using Freon and other respective substances contributes to the ecological character of the device.

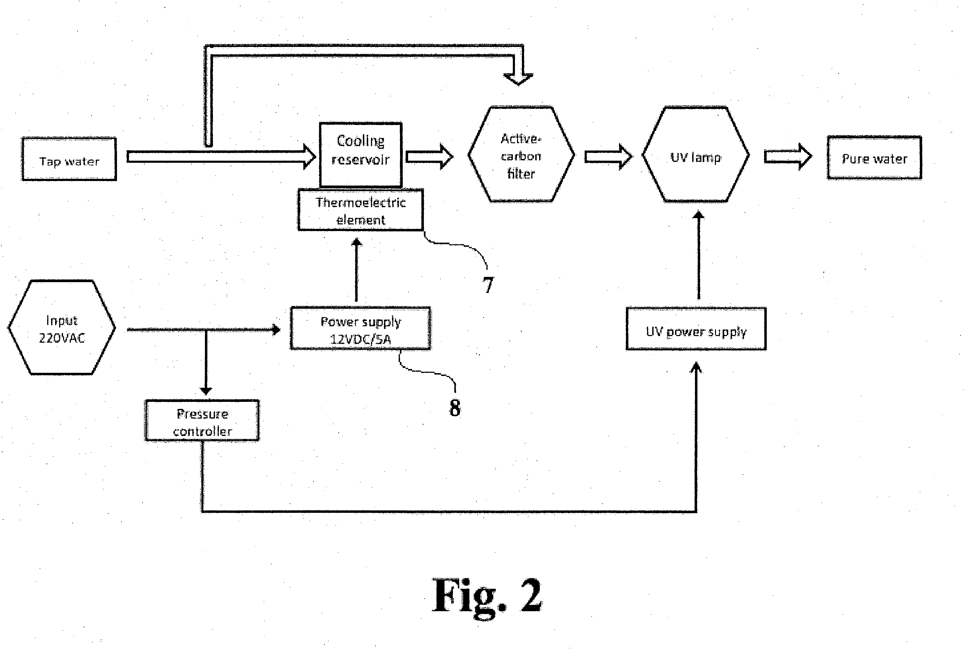

The cooling of the device is effected as already mentioned by using thermoelectric peltier elements (7), figure 2. The Peltier phenomenon is a thermoelectric effect observed when electric current passes through two different, semi-conductive materials connected at a point. Depending on the direction of electric current, this point may either be cooled or heated. Peltier elements consist of two different materials which are connected at two points. One point is heated and the other is cooled. In theory, this is due to the use of two semi-conductive materials with different numbers of electrons. These are joined at two points by a conductive material, thus in order to establish a balance and a homogeneous electron distribution free electrons migrate between the materials and an electric field is generated. If now electric current passes through the material, the opposite effect is obtained. In an effort to keep its balance, the one union point absorbs energy from the environment, and thus it is cooled, whereas the other emits energy to the environment as heat. The effect is stronger as the applied current is increased. For an efficient application of the thermoelectric elements, an effective removal of heat from the system is required by using brushes and a fan. One of the advantages of the thermoelectric peltier element (7) is that it does not require electric current at high voltage, since it can operate with low-voltage direct current, as that from the power supply (8) of the device. The cooling capability of the peltier element (7) is such that per hour of operation of the device, water at temperature of 27°C may be cooled to 3°C. As soon as the desired temperature is established, the device has a thermostat by which it is deactivated, and thus the energy consumed is significantly reduced in comparison to other electric cooling devices. Finally, it should be mentioned that upon establishment of the desired temperature, the device requires another 20 minutes to provide cold water again.

A subsequent step, after cooling of the water, is the purification of the water from any microorganisms or other harmful substances. It is known that mains water has been subjected to a chlorination procedure so that it is purified and becomes potable, however this is not 100% safe, since its quality may be deteriorated as it passes through the pipes. The filtering that it is achieved by the present device is effected in two steps and aims at removing from the water the harmful substances, without affecting beneficial substances, e.g. salts. The activation of the filter is performed as soon as water supply is on. The device has a pressure controller (10), which activates the filtering circuit as soon as it receives water under pressure. The operation of the pressure controller (10) is initiated by closing two plates when water passes under a relatively small pressure. Exemplarily, its activation may be effected at 0.5-1 bar only.

In the first stage of filtering, the water is passed through the pipes to the active-carbon filter (9), where it is dechlorinated, the harmful chemical substances, insecticides etc. are eliminated, and any paper residues, hair, worms and asbestos fibers are retained. The active-carbon filter (9) consists exemplarily of a mixture of plant carbonaceous material with silver, which makes it absolutely safe for the consumer, and its replacement is performed easily if required.

For the second stage of filtering, a UV lamp (11) is provided for further sterilization of the water from the harmful substances which may have survived the first stage. The UV lamp (11) is of type C rays. Since these rays have a very low wavelength, comparable to the wavelength of the human DNA, any direct contact with the skin should be avoided for safety reasons. Therefore, the UV lamp (11) is enclosed in an aluminum casing (12) that blocks emission to the outer environment during operation. At the same time, it is not kept activated throughout the period of the connection of the device to the supply, but only when the pressure controller (10) activates the circuit. The water obtained from the outlet tap (13) of the device is pure, cold depending on our needs and of high quality.

It should be noted that the description of the invention was made with reference to an exemplary, non-limiting, embodiment. Any change or modification regarding the shape, size, dimensions, manufacturing and assemblying materials and components used, application fields, as long as not constituting new inventive step and not contributing to the prior art, are considered encompassed in the scope of the present invention.

## Claims

1. New benchtop, household device for purifying and cooling water, **characterized in that** it consists of a cooling reservoir (4), in which water from the mains is cooled, by using thermoelectric peltier elements (7) connected to a power supply (8), before the water is directed to an active-carbon filter (9) and a UV lamp (11), which is arranged in an aluminum casing (12) and activated by the water pressure on a pressure controller (10), while the filtered and cold water is obtained from an outlet tap (13).

2. New benchtop, household device for purifying and cooling water, according to claim 1, **characterized in that** it has a three-way fitting (5) and a T-shaped fitting (6) at the inlet and the outlet of the cooling reservoir (4) respectively, in order to select if the water directed to the active-carbon filter (9) will be exclusively from the cooling reservoir (4), exclusively from the mains or a combination thereof.

3. New benchtop, household device for purifying and cooling water, according to claim 1, **characterized in that** it has a gasket (14) at the water inlet of the cooling reservoir (4), so that direct dispensing of mains water therein is prevented.
